# EUROPÄISCHE PATENTSCHRIFT

(11) **EP 0 680 977 B1**
(45) Veröffentlichungstag und Bekanntmachung des Hinweises auf die Patenterteilung: **01.04.1998**
(21) Anmeldenummer: 95106087.0
(22) Anmeldetag: 24.04.1995
(51) Int. Cl.: C08F 220/32, C08F 220/10, C08F 220/04, C09D 133/14

(54) **Hydroxy- und Carboxylgruppen enthaltende Copolymerisate, ihre Herstellung und ihre Verwendung in festkörperreichen Beschichtungsmitteln**
Copolymers containing hydroxyl and carboxyl groups, their preparation and their use in high solid coatings
Copolymères contenants des groupes hydroxyliques et carboxyliques, leur préparation et leur usage dans des revêtements à haute teneur en solides

(30) Priorität: 02.05.1994 DE 4415319
(43) Veröffentlichungstag der Anmeldung: 08.11.1995
(73) Patentinhaber: HOECHST AKTIENGESELLSCHAFT, 65926 Frankfurt am Main (DE)
(72) Erfinder: Epple, Ulrich, Dr., D-65205 Wiesbaden (DE); Kubillus, Uwe, Dr., D-65195 Wiesbaden (DE); Schmidt, Holger, Dr., D-65195 Wiesbaden (DE)
(74) Vertreter: Zounek, Nikolai, Dipl.-Ing.

(56) Entgegenhaltungen:
- EP-A- 0 320 719
- EP-A- 0 439 021
- EP-A- 0 528 169
- EP-B- 0 000 608
- DE-A- 2 851 613
- US-A- 3 330 814

## Beschreibung

Die Verwendung von festkörperreichen ("high solid") Beschichtungsmitteln zur Verringerung der Emission organischer Verbindungen bei Applikation eines Lackes ist aus Umweltgesichtspunkten zu begrüßen.

Es ist bekannt, daß solche Bindemittel durch Polymerisation in Substanz, bei der eine Komponente wie beispielweise ein Glycidylester oder ein Maleinat zu Beginn einer Polymerisation vorgelegt wird und dieser Ester bzw. dieses Monomer im weiteren Verlauf bei Zugabe von (im Fall des Maleinats weiteren) Monomeren während der Polymerisation vollständig in das Copolymerisat eingebaut (EP-A 0 027 931, EP-A 0 056 971 und DE-P-43 24 801.2) hergestellt werden können.

In der DE-A 28 51 613 wird ein zweistufiges Verfahren zur Herstellung von Hydroxylgruppen-tragenden Copolymerisaten beschrieben, in dessen erster Stufe α,β-ungesättigte Monocarbonsäuren mit Monoglycidylverbindungen verestert werden, und in dessen zweiter Stufe die Copolymerisation in Anwesenheit inerter Lösungsmittel durchgeführt wird.

In der EP-A 0 439 021 und der EP-A 0 528 169 werden speziell zusammengesetzte Hydroxylgruppen-haltige Copolymerisate beschrieben, die geringe Anteile an Polypropylenglykol-Monomethacrylat in der Monomerenmischung enthalten. Im Fall der EP-A 0 528 169 ist zusätzlich noch ein Polysiloxan in der Monomerenmischung enthalten.

Im Falle der Substanzpolymerisation mit Glycidylester wird dieser vorgelegt und dann mit Monomeren, wovon mindestens eines mindestens äquimolare Mengen Säure- bzw. Anhydridgruppen enthält, vollständig umgesetzt. Die Monomeren mit Anhydridgruppen sind zumindest teilweise hydrolysiert. Neben der Polymerisation findet also eine Umsetzung der Epoxidgruppen mit den Carbonsäuregruppen statt, bei der jeweils eine Estergruppe und eine sekundäre Hydroxylgruppe gebildet werden.

Der Vorteil solch einer Polymerisationsart im Vergleich zu einer Polymerisation in einem Lösemittel liegt in der freien Wahl der Lösemittel zur Verdünnung nach Abschluß der Reaktion. Hierdurch können auch höchste Konzentrationen des Bindemittels im Lösemittel eingestellt werden. Außerdem können vorteilhaft niedrigsiedende Lösemittel wie z.B. n-Butylacetat zur Anlösung des Polymeren verwendet werden und hochsiedende Lösemittel, die z.T. toxikologisch bedenklich sind wie z.B. alkylierte Aromaten weitgehend vermieden werden.

Gegenüber einer reinen Massepolymerisation hat diese Substanzpolymerisation den Vorteil, daß sie eine gute Abführung der Reaktionswärme ermöglicht und somit eine sichere Reaktionsführung erlaubt. Die richtige Wahl der Reaktionsparameter, insbesondere der Reaktionstemperatur und des Initiators, führt dann zu Produkten mit geringen Viskositäten und damit zu hohen Festkörpergehalten in einer fertigen Lackformulierung, wie in der EP-A 0 027 931 und der DE-P-43 24 801.2 beschrieben.

"High solid" Produkte mit hohem Anteil an Säure- bzw. Anhydridgruppen sind aus anwendungstechnischer Sicht wünschenswert, da hierdurch z.B. die Härtung bei der Autoreparaturlackierung stark beschleunigt wird. Eine noch schnellere Staubtrocknung und Klebfreiheit bei gleicher Verarbeitungszeit werden oft von den Autolackierwerkstätten gefordert.

Für das "base-coat / clear-coat"-Verfahren in der Autoserienlackierung ist es gleichfalls wichtig, Klarlacke mit einem möglichst geringen Gehalt an organischen Lösemitteln zu verwenden. Desweiteren ist auch eine Substitution von lösemittelreichen zu lösemittelarmen Unidecklacken angestrebt.

Diese Serienlacke werden von der Applikation her bei erhöhter Temperatur eingebrannt. Sie sollten nach dem Einbrennen kocherfreie Lackfilme mit gutem Aussehen und hohen Beständigkeiten ergeben. Vor allem die ungenügende Beständigkeit gegen Schwefelsäure sowie Xylol bzw. im Kationen-Anionen-Test wird oft von den Automobilherstellern bemängelt.

Versucht man jedoch in einer Verfahrensweise gemäß den genannten Patentanmeldungen die Reaktivität des Bindemittels durch Erhöhung des Verhältnisses der Zahl von Säure- bzw. Anhydridgruppen zu der Zahl von Epoxygruppen in den Glycidylestern zu steigern, führt dieses zu Produkten mit erhöhter Lösungsviskosität und damit nicht mehr zu "high solid" Produkten. Dies tritt auch bei entsprechenden Produkten auf, die tert.-Butylgruppen im Polymeren aufweisen. Bekanntlich kann die tert.-Butylgruppierung während oder nach der Polymerisation zu einer Säuregruppe oxydiert werden.

Diese höheren Lösungsviskositäten sind wahrscheinlich auf die verstärkte Möglichkeit der Ausbildung von inter- und auch intramolekularen Wasserstoffbrückenbindungen (sekundäre Bindungskräfte) zurückzuführen, durch das gleichzeitige Vorhandensein von hohen Gehalten an Hydroxy- und Säuregruppen im Copolymeren. Daneben können auch Veresterungs- bzw. Umesterungsreaktionen bei diesen Polymerisationsbedingungen zu den hohen Lösungsviskositäten der Hydroxy- und Carboxyl-Gruppen enthaltenden Copolymeren beitragen.

Der Gehalt an überschüssigen freien Säure- bzw. Anhydridgruppen im Copolymeren ist daher bei der Herstellung von "high-solid"-Bindemitteln gemäß den oben genannten Patentanmeldungen beschränkt.

Überraschenderweise wurde nun, gefunden, daß bei solchen hydroxygruppenhaltigen Copolymeren, die auch bestimmte sterisch gehinderte Monomere enthalten, selbst ein großer Uberschuß der Zahl an Säure- bzw. Anhydridgruppen zur Zahl der Epoxygruppen im Glycidylester zu keinem drastischen Anstieg in der Lösungsviskosität führt. Diese sind somit bestens geeignet als "high solid" Bindemittel, mit den gewünschten verbesserten Trocknungseigenschaften in der Autoreparaturlackierung (bei leicht erhöhter oder Raum-Temperatur). Es ist damit z.B. auch möglich, bei einer Reparaturlackierung die Härtung unter Wärme- bzw. IR-Bestrahlung zu forcieren, daß die beschichtete Oberfläche beispielsweise bei 60 °C Trocknungstemperatur bereits nach ca. 40 Minuten nicht mehr klebrig ist. Außerdem können mit diesen Bindemitteln in der Autoserienlackierung Klarlacke erhalten werden, die gute Beständigkeiten gegen Schwefelsäure und Xylol sowie im Kationen-Anionen-Test aufweisen.

Die erfindungsgemäßen Copolymerisate sind ausgezeichnet durch ihren gleichzeitig hohen Gehalt an Hydroxy- und Carboxyl- und/oder Carbonsäureanhydridgruppen und ihre extrem niedrige Viskosität. Die Erfindung betrifft weiter die Herstellung dieser Copolymerisate und ihre Verwendung als Bestandteil von Beschichtungsmitteln.

Die Erfindung betrifft insbesondere Copolymerisate mit einer OH-Zahl von 40 bis 250 mg KOH/g, einer Säurezahl von größer als 15 mg KOH/g und einer niedrigen Lösungsviskosität von 10 bis 2000 mPa s (gemessen an einer 50 %igen Lösung bei 23 °C gemäß DIN 53018). Alle Angaben in % im folgenden sind Massengehalte.

Die erfindungsgemäßen Hydroxyl- und Carboxylgruppen enthaltenden Copolymerisate sind erhältlich durch Umsetzung von
A) 3 bis 50 Gew.% eines oder mehrerer Glycidylester von aliphatischen gesättigten Monocarbonsäuren mit einem tertiären oder quaternären α-C-Atom,
und
B) 97 bis 50 Gew.% von mindestens zwei olefinisch ungesättigten copolymerisierbaren Monomeren, von denen jeweils mindestens eines der Gruppe B1 und mindestens eines der Gruppe B2 angehört, wobei die Gruppe B1 Monomere mit mindestens einer COOH-Gruppe enthält und die Gruppe B2 sterich gehinderte Ester der Acryl- oder Methacrylsäure mit Alkoholen enthält, die ausgewählt sind aus der Gruppe Cyclohexylalkohol, 4-tert. Butyl-cyclohexylalkohol, 3,3,5-Trimethyl-cyclohexylalkohol, Dihydrocyclopentadienylalkohol und Isobornylalkohol,
in Gegenwart von radikalischen Polymerisationsinitiatoren, wobei die Menge an COOH-Gruppen in der Komponente B die Menge an Epoxygruppen in der Komponente A soweit übersteigt, daß das resultierende Copolymerisat eine Säurezahl von mindestens 15 mgKOH/g aufweist, und wobei die Copolymeren eine zahlenmittlere molare Masse unter 5000 g/mol, eine OH-Zahl von 40 bis 250 mg/g und eine Lösungsviskosität von 10 bis 2000 mPa·s (gemessen in 50 %iger Lösung in Butylacetat bei 23 °C) besitzen. Bevorzugt werden 6 bis 30 % der Komponente A und 70 bis 94 % der Komponenten B eingesetzt.

Die resultierenden Copolymeren weisen hohe Säurezahlen auf und besitzen dennoch geringste Lösungsviskositäten.

Als Komponente A werden bevorzugt Glycidylester von α-A*lkylalkanmonocarbonsäuren und/oder α,α-Dialkylalkanmonocarbonsäuren einzeln oder im Gemisch verwendet.

Die Verbindungen gemäß A sind beispielsweise ausgewählt aus den Glycidylestern der 2,2-Dimethylpropionsäure, der 2,2-Dimethylundecansäure und der Neosäuren wie Neohexansäure, Neononansäure und Neodecansäure. Die Alkylreste können hierbei auch eine unterschiedliche Anzahl an C-Atomen besitzen.

Im allgemeinen liegt die Gesamtzahl an C-Atomen der Ausgangsmonocarbonsäuren für den Glycidylester zwischen 4 und 30, insbesondere zwischen 5 und 20.

Die Komponente B besteht aus einem Gemisch von
B1) einem oder mehreren olefinisch ungesättigten Monomeren mit mindestens einer -COOH-Gruppe, und
B2) einem oder mehreren olefinisch ungesättigten sterisch gehinderten Monomeren, die Ester der Acryl- oder Methacrylsäure sind mit Alkoholen ausgewählt aus der Gruppe Cyclohexylalkohol, 4-tert. Butyl-cyclohexylalkohol, 3,3,5-Trimethyl-cyclohexylalkohol, Dihydrocyclopentadienylalkohol und Isobornylalkohol,
sowie gegebenenfalls einer oder mehreren der Komponenten B3 bis B5, nämlich
B3) einem oder mehreren Hydroxyalkylestern, Hydroxyarylestern oder oligomeren Hydroxyalkylenglykolestern ungesättigten Carbonsäuren,
B4) einem oder mehreren Estern einer ungesättigten Carbonsäure mit einem einwertigen aliphatischen Alkohol mit 1 bis 20 C-Atomen und
B5) einer oder mehreren olefinisch ungesättigten Verbindungen, die nicht unter B1, B2, B3 oder B4 fallen.

Die Verbindungen gemäß B1 sind beispielsweise ausgewählt aus den sauren Acrylmonomeren wie Acryl- und Methacrylsäure, Malein-, Fumar- und Itaconsäure sowie deren Halbestern, und Crotonsäure, Isocrotonsäure und Vinylessigsäure. Auch in den weiter unten genannten Komponenten B3 bis B5 schließt der Begriff "α,β-ungesättigte Carbonsäuren" die Dicarbonsäuren wie beispielsweise Maleinsäure, Fumarsäure und Itaconsäure sowie deren Halbester ein.

Die Verbindungen gemäß B2 sind Ester der Acryl- oder Methacrylsäure mit Alkoholen ausgewählt aus der Gruppe Cyclohexylalkohol, 4-tert. Butyl-cyclohexylalkohol, 3,3,5-Trimethyl-cyclohexylalkohol, Dihydrocyclopentadienylalkohol und Isobornylalkohol.

Weitere sterisch gehinderte olefinisch ungesättigte Monomere, die bei der Herstellung der erfindungsgemäßen Polymeren enthalten sein können, sind Ester von α,β-ungesättigten Carbonsäuren wie der Acrylsäure und der Methacrylsäure mit den nachfolgend aufgezählten Alkoholen sowie bestimmte Vinylmonomere. Die Alkohole können aliphatische verzweigte oder cyclische Alkohole oder aromatische Alkohole sein. Die Alkohole können auch mehrere dieser Strukturmerkmale in sich vereinigen.

Geeignete aliphatische verzweigte, nichtcyclische Ester der Methacrylsäure oder der Acrylsäure können aus diesen Säuren und einem oder mehreren verzweigten, nichtcyclischen, gesättigten oder ungesättigten Alkoholen mit 3 bis 30 C-Atomen, insbesondere 4 bis 20 C-Atomen dargestellt werden.

Geeignete gesättigte Alkohole sind u.a. tert.-Butylalkohol, tert.-Amylalkohol, 2-Methylbutanol, 3-Methylbutanol, Neopentylalkohol, 3-Methyl-2-butanol, 2-Pentanol, 3-Pentanol, 2,3-Dimethyl-2-butanol, 3,3-Dimethylbutanol, 3,3-Dimethyl-2-butanol, 2-Äthyl-2-butanol, 2-Hexanol, 3-Hexanol, 2-Methylpentanol, 2-Methyl-2-pentanol, 2-Methyl-3-pentanol, 3-Methylpentanol, 3-Methyl-2-pentanol, 3-Methyl-3-pentanol, 4-Methylpentanol, 4-Methyl-2-pentanol, 2-(2'-Hexyloxyäthoxy)äthanol, 2,2-Dimethyl-3-pentanol, 2,3-Dimethyl-3-pentanol, 2,4-Dimethyl-3-pentanol, 4,4-Dimethyl-3-pentanol, 3-Äthyl-3-pentanol, 2-Heptanol, 3-Heptanol, 2-Methyl-2-hexanol, 2-Methyl-3-hexanol, 5-Methyl-2-hexanol, 2-Äthylhexanol, 4-Methyl-3-heptanol, 6-Methyl-2-heptanol, 2-Octanol, 3-Octanol, 2-Propylpentanol, 2,4,4-Trimethylpentanol, 2,6-Dimethyl-4-heptanol, 3-Äthyl-2,2-dimethyl-3-pentanol, 2-Nonanol, 3,5,5-Trimethylpentanol, 3,5,5-Trimethylhexanol, 2-Decanol, 4-Decanol, 3,7-Dimethyloctanol, 3,7-Dimethyl-3-octanol, 2-Dodecanol und 2-Tetradecanol. Weitere geeignete Alkohole sind handelsübliche Mischungen von verzweigten Alkoholen, die beispielsweise von Exxon Chemical unter den Handelsnamen ®Exxal 6, ®Exxal 7 bis ®Exxal 13 angeboten werden. (Die Zahl hinter dem Handelsnamen gibt die Zahl der C-Atome der Alkohole an).

Geeignete ungesättigte Alkohole sind beispielsweise 1-Hexen-3-ol, Phytol (=3,7,11,15-Tetramethyl-2-hexadecenol), 3-Methyl-1-penten-3-ol, 4-Methyl-3-pentenol, 2-Methyl-3-butenol, 3-Methyl-3-buten-2-ol, 3-Methyl-2-butenol, 3-Methyl-3-butenol, 1-Penten-3-ol, 3-Penten-2-ol, 4-Penten-2-ol, 6-Methyl-5-hepten-2-ol, 1-Octen-3-ol, Nopol (=6,6-Dimethyl-2-[2-hydroxyäthyl]-bicydo[3,1,1]-hepten-2-) und Oleylalkohol.

Geeignet sind weiter Ester der Acryl- oder Methacrylsäure mit cyclischen aliphatischen Alkoholen wie 8-Hydroxy-tricyclo[5.2.1.0^{2.6}]decan, 8-Hydroxymethyltricyclo-[5.2.1.0^{2.1}]decan und Citronellol.

Weitere geeignete Ester der Acryl- oder Methacrylsäure lassen sich z.B. mit den folgenden Alkoholen (Aralkanolen) darstellen:
trans-2-Phenylcyclohexanol, 6-Phenylhexanol, 3,5-Bis(trifluormethyl-)benzylalkohol, Cyclopropyldiphenylmethanol, 1,1,1,3,3,3-Hexafluor-2-phenylpropan-2-ol, 2-Brom-1-indanol, 1-Indanol, 2-Indanol, 5-Indanol, 3-Chlor-1-phenylpropan-1-ol, 3,5-Dimethylbenzylalkohol, 1-Phenylpropan-2-ol, 2,3-Dihydro-2,2-dimethylbenzofuran-7-ol und 2-Methoxyphenyläthylalkohol.

Geeignete Phenyl- und Naphthylester der Acryl- oder Methacrylsäure lassen sich beispielsweise aus einer oder mehreren der folgenden Hydroxyaromaten darstellen, die auch durch eine oder mehrere Alkyl- und/oder Alkoxy-Gruppen mit einem bis acht C-Atomen substituiert sein können:
2-Cyclopentylphenol, 2,6-Di-tert.butyl-4-methylphenol, Nonylphenol, 2,4,6-Tri-tert.-butylphenol, 1,2,3,4-Tetrahydro-1-naphthol, 5,6,7,8-Tetrahydro-1-naphthol, 5,6,7,8-Tetrahydro-2-naphthol, 2-sec.-Butylphenol, 2-tert.-Butylphenol, 3-sec.-Butylphenol, 3-tert.-Butylphenol, 4-sec.-Butylphenol, 4-tert.-Butylphenol, 2,3,5-Trimethylphenol und 2,6-Dimethylphenol.

Sterisch gehinderte Vinylmonomere sind beispielsweise Styrol, 4-Phenylstyrol, Vinylcyclohexan, Vinylcyclooctan, Vinylcyclopentan, Norbornen, 1,4,6,8-Dimethano-octahydronaphthalin, 5-Vinyl-2-norbornen, Limonen, tert.-Butylstyrol, α-Methylstyrol, 4-Methylstyrol, eines oder mehrere der isomeren Vinyltoluole ggf. im Gemisch, Vinylester von verzweigten aliphatischen Carbonsäuren wie Vinyl-2-äthylhexanoat, Äthylidennorbornen und Alkyl- oder Alkoxystyrole mit 1 bis 8 C-Atomen in der Alkyl- bzw. Alkoxygruppe.
Styrol nimmt hierbei eine Sonderstellung ein, da es ein preiswertes Standard-monomer ist.

Die Hydroxyalkylester gemäß B3 sind Halbester von ungesättigten Monocarbonsäuren mit aliphatischen Diolen mit 2 bis 30, insbesondere 2 bis 20 C-Atomen. Halbester mit einer primären Hydroxygruppe sind beispielsweise Hydroxyäthylacrylat, Hydroxypropylacrylat, Hydroxybutylacrylat, Hydroxyamylacrylat, Neopentylglykolmonoacrylat, Hydroxyhexylacrylat, Hydroxyoctylacrylat und die entsprechenden Methacrylate. Als Beispiele für verwendbare Hydroxyalkylester mit einer sekundären Hydroxygruppe seien 2-Hydroxypropylacrylat, 2-Hydroxybutylacrylat, 3-Hydroxybutylacrylat und die entsprechenden Methacrylate genannt. Selbstverständlich können jeweils auch die entsprechenden Ester anderer α,β-ungesättigter Carbonsäuren wie z.B. der Crotonsäure, der Isocrotonsäure und der β,γ-ungesättigter Vinylessigsäure eingesetzt werden. Gleichfalls geeignet sind auch Umsetzungsprodukte aus einem Mol Hydroxyäthylacrylat und/oder Hydroxyäthylmethacrylat und durchschnittlich zwei Mol ε-Caprolacton. Andere geeignete hydroxygruppenhaltige Ester leiten sich ab von den α,β-ungesättigten Carbonsäuren und den oligomeren Alkylenglykolen wie Oligo-äthylen- und - propylenglykol mit Molmassen bis zu 1000 g/mol. Weitere geeignete Verbindungen sind Halbester von α,β-ungesättigten Monocarbonsäuren mit cycloaliphatischen Diolen wie 1,4-Cyclohexandimethanol, 3(4),8(9)-Bis-(hydroxymethyl)-tricydo[5.2.1.0^{2.6}]decan oder Dihydroxyaromaten wie Brenzkatechin, Hydrochinon und Bisphenol A.

Die Verbindungen gemäß B4 sind beispielsweise ausgewählt aus Estern ungesättigter Monocarbonsäuren mit aliphatischen einwertigen unverzweigten Alkoholen mit 1 bis 20 C-Atomen wie Methyl-, Äthyl-, Butyl-, Hexyl-, Lauryl- und Stearylsowie Isopropyl- und 2-Amylacrylat oder -methacrylat. Geeignet sind auch Ester dieser Alkohole mit z.B. Crotonsäure, Isocrotonsäure oder Vinylessigsäure. Besonders bevorzugt sind Methyl- und Äthyl-Acrylat sowie die entsprechenden Methacrylate.

Die Verbindungen gemäß B5 sind beispielsweise ausgewählt aus der Gruppe der Ester der Acryl- und Methacrylsäure mit halogenierten Alkoholen wie z.B. Trifluoräthyl-, Pentafluor-n-propyl- und Hexachlorbicycloheptenyl-acrylat, der Ester halogenierter Acrylsäuren wie Methyl-2-fluoracrylat oder Dibromphenyl-2-fluoracrylat, der Vinylester wie Vinylacetat, der halogenierten Vinylverbindungen wie Vinylchlorid, Vinylidenchlorid und Vinylidenfluorid und der halogenierten vinylaromatischen Verbindungen wie Chlorstyrol. Sämtliche Verbindungen, die unter B1 bis B4 genannt sind und zusätzlich halogensubstituiert sind, fallen ebenfalls in diese Gruppe.

Verbindungen gemäß B5 sind auch Monomere, die Silangruppen enthalten. Typische Beispiele dieser Monomeren sind Acrylatoalkoxysilane, wie γ-(Meth)Acryloxypropyltrimethoxysilan, γ-(Meth)Acryloxypropyltris(2-methoxyäthoxy)silan und Vinylalkoxysilane, wie Vinyltrimethoxysilan, Vinyltriäthoxysilan und Vinyltris(2-methoxyäthoxy)silan. Hierunter fallen auch entsprechende Acyloxysilane, wie Dimethylacetoxyvinylsilan.

Als weitere exemplarische Verbindungen von B5 sind auch Acrylamide, Acrylnitril und Methacrylnitril zu nennen.

Im Ausgangsmonomergemisch besteht die Komponente B bevorzugt aus einem Gemisch von
B1) 1 bis 50, vorzugsweise 5 bis 40 % einer α,β-ungesättigten Monocarbonsäure oder Dicarbonsäure, vorzugsweise Acryl- oder Methacrylsäure, Malein-, Fumar- oder Itaconsäure sowie deren Halbestern, oder deren Mischungen,
B2) 1 bis 85, vorzugsweise 3 bis 80 % eines der vorstehend unter B2 genannten olefinisch ungesättigten Monomeren oder Mischungen von mehreren solcher Monomeren,
B3) 0 bis 45, vorzugsweise 10 bis 45 % eines Hydroxyalkylesters oder oligomeren Hydroxyalkylenglykolesters der Acrylsäure oder Methacrylsäure oder Mischungen mehrerer solcher Ester,
B4) 0 bis 60, vorzugsweise 1 bis 55 % eines Esters der Acryl- oder Methacrylsäure mit einem einwertigen aliphatischen Alkohol oder Mischungen mehrerer solcher Ester,
B5) 0 bis 60, vorzugsweise 1 bis 55 % mindestens einer olefinisch ungesättigten Verbindung, wie oben beschrieben,
wobei die Summe stets 100 % der Gesamtmasse der Komponenten B beträgt, und die Summe der Massenanteile der Ester bevorzugt nicht mehr als 90 % beträgt.

Besonders geeignete Monomere sind
B1) Acrylsäure, Methacrylsäure, Maleinsäure und Fumarsäure,
B2) Cyclohexyl-, 4-tert.Butylcyclohexyl-, 3,3,5-Trimethylcyclohexyl-, Isobornyl- und Dihydrodicyclopentadienylester der Acryl- und der Methacrylsäure,
B3) Hydroxyäthyl-, Hydroxypropyl- und Hydroxybutylester der Acryl- und der Methacrylsäure, oligomere Propylenglykolester der Acryl- und der Methacrylsäure,
B4) Methyl-, Äthyl-, Butyl-, Pentyl-, Hexyl-, Lauryl- und Stearylester der Acryl- und Methacrylsäure
B5) fluorierte und chlorierte Acrylester, fluorierte und chlorierte vinylaromatische Verbindungen und Monomere, die Silangruppen enthalten.

Während der Polymerisationsreaktion bildet sich aus den sauren Monomeren und dem vorgelegten Glycidylester ein Umsetzungsprodukt, das im erfindungsgemäßen Copolymerisat im allgemeinen in einem Massenanteil von 6 bis 60, vorzugsweise 10 bis 55 % vorliegt.

Die Reaktion zwischen den Carboxylgruppen und den Epoxidgruppen kann unkatalysiert oder katalysiert erfolgen. Als Katalysatoren eignen sich besonders (Erd)Alkalimetall- und Übergangsmetall-Verbindungen, wie beispielsweise Na-, Li-, K-, Ca-, V-, Zr- und Ti-Verbindungen.

Die überschüssigen Anteile an sauren Monomeren führen dann zu einem hohen Säuregehalt im Copolymeren. Dies führt zu einer Säurezahl von größer als 15 mg KOH/g im Copolymerisat.

Für die erfindungsgemäßen Copolymerisate kommen die üblichen radikalbildenden Verbindungen als Polymerisationsinitiatoren einzeln oder im Gemisch in Frage. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid und Alkylperester, wie t-Butylperoxy-2-äthylhexanoat oder t-Amylperoxy-2-äthylhexanoat. Der Anteil der Initiatoren kann z.B. 0,5 bis 5, vorzugsweise bis 4, insbesondere bis 3 %, bezogen auf die Gesamtmasse der Ausgangskomponenten, betragen.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil möglich, nämlich bis zu 20, vorzugsweise bis zu 10 und insbesondere bis zu 5 %, bezogen auf die Masse der Ausgangskomponenten. Dabei kann auch unter erhöhtem Druck polymerisiert werden. Jedoch ist das Arbeiten ohne Lösemittel vorzuziehen.

Die Polymerisation kann erfindungsgemäß so durchgeführt werden, daß alle Komponenten A und B gemeinsam mit einem oder mehreren radikalbildenden Initiatoren gemeinsam umgesetzt werden, wobei die Esterbildung und die Polymerisation gleichzeitig nebeneinander ablaufen. In einer anderen Verfahrensweise wird zunächst die Komponente A, der Glycidylester, vorgelegt und üblicherweise bei 100 bis 210 °C mit den Komponenten B und mindestens einem radikalischen Initiator in einer Substanzpolymerisation so lange umgesetzt wird, bis ein Umsetzungsgrad von mindestens 95, vorzugsweise mindestens 96 % erreicht ist. Ein dritter erfindungsgemäßer Weg ist die Polymerisation von mindestens einer Komponente aus der Gruppe B im ersten Schritt, im zweiten Schritt wird weiterer (gegebenenfalls ein anderer) Initiator, die Restmenge der Komponenten B und die Komponente A zugefügt. Diese Verfahrensweise ermöglicht es, die Polymerisation sowie die Veresterung bei unterschiedlichen Temperaturen durchzuführen. Der vierte erfindungsgemäße Weg ist die Umsetzung des in der ersten Stufe ggf. in Lösung gebildeten Polymerisats mit der Komponente A in einer zweiten Stufe. Je nach den Parametern der beteiligten Monomeren kann eine der vorgeschlagenen Verfahrensweisen günstiger sein als andere.

Die erfindungsgemäßen Verfahren können diskontinuierlich (sogenanntes "batch"-Verfahren) oder kontinuierlich durchgeführt werden. Bei den mehrstufigen Verfahren ist auch eine Ausführungsform möglich, in der die jeweiligen Umsetzungsstufen in separaten Behältern durchgeführt werden. Ebenfalls ist es möglich, die Umsetzung der ersten Stufe kontinuierlich und die der zweiten Stufe diskontinuierlich durchzuführen.

Die hergestellten hydroxy-, carboxyl- und/oder carbonsäureanhydrid-gruppenhaltigen Copolymerisate können in einer weiteren Stufe noch modifiziert werden, z.B. durch Umsetzen mit Isocyanat-Verbindungen, die pro Molekül durchschnittlich 0,8 bis 1,5 freie NCO-Gruppen und mindestens eine tertiäre Aminogruppe enthalten. Dann muß das bei der Polymerisation, also der Herstellung der Polymeren, eingesetzte Lösemittel selbstverständlich gegenüber diesen Isocyanat-Verbindungen inert sein.

Diese Isocyanat-Verbindungen schließen beispielsweise auch alle niedermolekularen Harnstoffderivate ein, die in der Lackindustrie zu "sag controlled" Acrylatharzen führen.

Die erfindungsgemäßen Copolymerisate zeichnen sich aus durch ihren Gehalt an OH-Gruppen, die im allgemeinen zu einer OH-Zahl von 40 bis 250, bevorzugt von 70 bis 200 und insbesondere von 80 bis 180 mg KOH/g führen, sowie durch ihren Gehalt an Säuregruppen, die im allgemeinen zu einer Säurezahl größer als 15, bevorzugt von 18 bis 50 und insbesondere von 21 bis 35 mg KOH/g führen.

Weiterhin besitzen die erfindungsgemäßen Polymerisate eine besonders niedrige Lösungsviskosität. Im allgemeinen liegt sie im Bereich von 10 bis 2000, vorzugsweise 15 bis 500 und insbesondere 20 bis 150 mPa s, gemessen an einer 50 %igen Lösung in Butylacetat bei 23 °C nach DIN 53018. Die Polymerisate besitzen typischerweise mittlere Molmassen (Zahlenmittel) von kleiner 5000, bevorzugt von 300 bis 4500 und insbesondere von 500 bis 4000 g/mol.

Geeignete Lösemittel für die erfindungsgemäß erhaltenen Produkte sind z.B. aliphatische, cycloaliphatische und/oder aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat; Äther, wie Äthylenglykolacetatmonoäthyl-, methyl- oder butyläther; Glykole; Alkohole; Ketone wie Methylamylketon, Methylisobutylketon; Lactone oder dergleichen oder Gemische derartiger Lösemittel.

Gegenstand der vorliegenden Erfindung sind weiterhin Beschichtungsmittel, die die erfindungsgemäßen, hydroxy- und carboxylgruppenhaltigen Copolymerisate als Bindemittelkomponente enthalten. Die Copolymerisate können in Gegenwart von geeigneten Vernetzern kalt oder bei erhöhter Temperatur gehärtet werden.

Die erfindungsgemäßen Copolymerisate eignen sich besonders gut für Überzüge, besonders lacktechnische Anwendungen in 2-Komponenten- und 1-Komponenten-Systemen, insbesondere für sogenannte "high-solid" Systeme, also für lösemittelhaltige Mischungen mit hohem Festkörpergehalt, in der Autoreparatur- und Autoserienlackierung.

Weiterhin gut geeignet sind die erfindungsgemäßen Copolymerisate für pigmentierte Decklacke und für Füller.

Als Härterkomponente eignen sich in diesen Beschichtungsmitteln Umsetzungsprodukte von Formaldehyd mit Aminoplastbildnern wie Harnstoff, Alkylenharnstoffen, Melamin und Guanaminen oder deren Äther mit niedrigen Alkoholen mit 1 bis 8 Kohlenstoffatomen wie Methanol oder Butanol, weiter Polyisocyanate sowie Anhydridgruppen enthaltende Verbindungen einzeln oder in Kombination. Der Vernetzer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Als Härterkomponente geeignete Formaldehyd-Addukte sind bevorzugt solche, die von Harnstoff, Melamin und Benzoguanamin abgeleitet sind sowie die vollständig oder teilweise verätherten Formaldehyd-Amin-Addukte. Besonders bevorzugt werden teilweise oder vollständig mit aliphatischen Alkoholen mit 1 bis 4 C-Atomen verätherte Melamin-Formaldehyd-Addukte als Härtungsmittel eingesetzt. Beispiele für solche kommerziell erhältlichen Härter sind ®Maprenal MF 900 und VMF 3926 (Cassella AG) sowie ®Cymel 303 und 327 (Cytec). Geeignete Mischungsverhältnisse liegen im Bereich von 50 bis 90 Teilen Copolymerisat zu 50 bis 10 Teilen Amin-Formaldehyd-Addukt, bezogen auf Festharz.

Auch geeignete Formaldehyd-Phenol-Addukte und deren Derivate können als Härter eingesetzt werden.

Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen Produkte, besonders bei moderaten Temperaturen bzw. bei Raumtemperatur, unter Vernetzung eignen sich Polyisocyanate. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethyl-cydohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin-Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP 0 470 461 beschrieben werden. Zu den besonders bevorzugten modifizierten Polyisocyanaten gehören das N,N',N"-Tris(6-isocyanatohexyl)-biuret und seine Gemische mit seinen höheren Homologen, sowie das N,N',N"-Tris(6-isocyanatohexyl)-isocyanurat bzw. dessen Gemische mit seinen höheren, mehr als einen Isocyanuratring aufweisenden Homologen.

Die Vernetzung kann durch Zusatz von organischen Metallverbindung, wie Zinnverbindungen und gegebenenfalls tertiären Aminen, vorzugsweise Diäthyläthanolamin, katalysiert werden. Entsprechende Zinnverbindungen sind beispielsweise Dibutylzinndilaurat, Dibutylzinndiacetat und Dibutyloxozinn.

Für eine Härtung bei erhöhter Temperatur kommen zusätzlich verkappte Polyisocyanate, Polycarbonsäuren bzw. deren Anhydride in Frage.

Die erfindungsgemäßen Copolymerisate eignen sich besonders gut zur Herstellung von festkörperreichen ("high-solid"), lösemittelhaltigen Klarlacken.

Außerdem eignen sie sich gut zur Herstellung von Pulverlacken. Sie lassen sich auch als Härter für verschiedene Kunstharze, insbesondere Epoxyharze und Dispersionen dieser Harze, einsetzen.

In Beschichtungsmitteln, die mit den erfindungsgemäßen Copolymerisaten hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe, Füllstoffe wie Talkum, Glimmer, Kaolin, Kreide, Quarzmehl, Asbestmehl, Schiefermehl, verschiedene Kieselsäuren und Silikate, viskositätskontrollierende Zusätze, Mattierungsmittel, UV-Absorber, Lichtschutzmittel, Antioxidantien, Peroxidzersetzer, Entschäumer, Netzmittel und aktive Verdünner - Reaktivverdünner.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Es ist auch möglich, die Beschichtungsmittel bei erhöhtem Druck und Temperatur, z.T. in überkritischem CO₂ gelöst, zu applizieren. Autoreparaturlacke mit ausgezeichneten Eigenschaften lassen sich mit Bindemitteln erhalten, die mit den erfindungsgemäßen Copolymerisaten hergestellt werden. Diese Bindemittel können sowohl zur Herstellung von Zwischenschichten als auch von pigmentierten oder unpigmentierten Decklacken eingesetzt werden. Ausdrücklich soll auf die vorzügliche Eignung dieser Bindemittelkombinationen in Zweikomponenten-Autoreparatur- und Industrielacken hingewiesen werden.

Hierzu werden die Lacke im allgemeinen innerhalb des Temperaturbereichs von -20 bis +100 °C, vorzugsweise von -10 bis + 80 °C ausgehärtet.

Mit diesen Beschichtungsmitteln lassen sich auch Autoserienklarlacke nach dem "base-coat/clear-coat" Verfahren applizieren, die ausgezeichnete Eigenschaften aufweisen. Insbesondere zeichnen sich diese Klarlacke durch ihre guten Beständigkeiten gegen Schwefelsäure und Xylol sowie im Kationen-Anionen-Test aus sowie durch ihre hohen Härten. Ausdrücklich soll auf die vorzügliche Eignung dieser Bindemittelkombinationen in 1-Komponenten-Autoserienlacken hingewiesen werden.

Hierzu werden die Lacke im allgemeinen innerhalb des Temperaturbereichs von + 80 bis + 200 °C, vorzugsweise von + 90 bis + 170 °C eingebrannt.

Die Erfindung wird in den folgenden Beispielen näher erläutert. Alle Prozentangaben sind Massengehalte und alle Teile sind Massen- (Gewichts-) Teile, soweit nicht anders ausdrücklich festgelegt.

### Beispiele:

### I. Herstellung der Copolymerisate

In einem mit Rührwerk, Inertgaseinleitung, Heiz- und Kühlsystem und Zugabeeinrichtung ausgestatteten Reaktor, wird der Glycidylester einer α,α-Dialkylalkanmonocarbonsäure [z.B. Glycidylester der Versatic 10 bzw. 5 Säure (Handelsname: Cardura® E 10 bzw. Cardura® E 5, Shell Chemicals)] (z.T. in Lösemittel oder Lösemittelgemischen) vorgelegt und unter Inertgas auf die gewünschte Temperatur aufgeheizt. Dann wird innerhalb 6 Stunden die Monomerenmischung gemäß Tabelle 1 (z.T. in Lösemittel oder Lösemittelgemischen) zusammen oder getrennt mit Initiator oder Initiatormischungen (z.T. in Lösemittel oder Lösemittelgemischen) gleichmäßig zudosiert. Anschließend wird noch 2 Stunden nachpolymerisiert, bis ein Umsatz von mindestens 95 % erreicht ist.

Falls der Festkörpermassengehalt nach der Polymerisation unter 97,5 % liegt, wird der Ansatz entweder vor oder während der Nachpolymerisation mit 1/10 der Ausgangsinitiatormenge (ohne/mit Lösemittel) nachgeimpft oder die Restmonomeren (inkl. Initiatorfragmente/Lösemittel) werden in einer Vakuumdestillation abgetrennt.

Die Copolymerisate werden in geeigneten Lösemitteln oder Lösemittelgemischen angelöst.

Alle Copolymerisate werden durch eine geeignete Filtereinrichtung filtriert. Die genauen Ansätze für die Herstellung der Copolymerisate in Gewichtsteilen, Reaktionsbedingungen und Kennzahlen der Produkte sind aus der nachstehenden Tabelle zu entnehmen.

**Tabelle 1:**

| Herstellung und Eigenschaften der Copolymerisate | | | | |
|---|---|---|---|---|
| **Ansatz** | **Copolymer 1** | **Copolymer 2** | **Copolymer 3** | **Copolymer 4** |
| Glycidylester (Cardura® E10) | 24,18 | 22,45 | 22,69 | 11,43 |
| Acrylsäure | 3,54 | - | 3,63 | 1,83 |
| Methacrylsäure | 7,69 | 10,72 | 7,37 | 4,40 |
| Hydroxyäthylmethacrylat | 19,85 | 18,05 | 18,94 | 25,29 |
| Polypropylenglykol(n=5 oder 6)- | - | 0,95 | 0,95 | 0,95 |
| monomethacrylat | | (n = 5) | (n = 5) | (n = 6) |
| Isobornylmethacrylat | 14,89 | 10,07 | - | - |
| Isobornylacrylat | - | - | 10,32 | - |
| 4-tert.-Butylcyclohexylmethacrylat | - | - | - | 14,93 |
| Methylmethacrylat | 7,18 | 4,82 | 12,82 | 6,66 |
| Styrol | 22,67 | 32,94 | 23,28 | 34,51 |
| Initiator | DTAP | DTAP | DTAP | DTAP |
| | | | | |
| Teile | 1,50 | 1,50 | 1,50 | 1,50 |
| Polymerisationstemperatur (°C) | 170 | 175 | 175 | 180 |
| FK (%) nach Polymerisation | 97,2 | 98,1 | 97,8 | 96,9 |
| nach Destillation | 98,4 | - | - | 98,1 |
| FK (%) Lff. (in Butylacetat) | 70,1 | 70,4 | 69,9 | 70,2 |
| Säurezahl (mg KOH/g FH) | 22,3 | 23,3 | 25,7 | 32,1 |
| Hydroxylzahl (mg KOH/g FH) | 134,8 | 136,0 | 142,8 | 143,2 |
| Viskosität (mPa s), 23°C (Lff.) Viskosität (mPa s), 23°C | 3280 | 5860 | 8410 | 6230 |
| (50%ig in BuAc) | 51 | 58 | 61 | 52 |
| GPC (PS-Eichung) | | | | |
| <Mw> (g/mol) | 3800 | 4380 | 4510 | 3270 |
| <Mn> (g/mol) | 1780 | 2160 | 2100 | 1490 |
| U = <Mw> / <Mn> | 2,1 | 2,0 | 2,2 | 2,2 |
| Hazen-Farbzahl (DIN 53995) | 51 | 36 | 42 | 63 |
| Tg (DSC-Messung, °C) | 24 | 23 | 26 | 22 |
| Aussehen | transparent | transparent | transparent | transparent |
| FK: Festkörpermassengehalt, | | | | |
| FH: Festharz | | | | |
| Lff.: Lieferform | | | | |
| n: mittlerer Polymerisationsgrad des Polypropylenglykols | | | | |
| Tg: Glasübergangstemperatur des Festharzes, DSC-7 Perkin Elmer,10 K/Min. | | | | |
| Initiator: | | | | |
| DTAP : Di-tert.-amylperoxid: (Interox® DTAP) (Peroxid Chemie) | | | | |
| GPC: <Mw>, <Mn> Millipore® Waters Chromatographie System 860 Pumpe: Model 590 RI-Detektor: Model 410 | | | | |
| Säulensatz: Waters Utrastyragel 2 x LINEAR + 1 x 500 Å | | | | |
| Lösungsmittel: Tetrahydrofuran bei 40 °C | | | | |
| Durchfluß: 1 ml/min., Konzentration: 1 %ig auf Festkörper | | | | |
| Kalibrierung: Polystyrol (Fa. PSS, Mainz) | | | | |
| Bestimmung der Kenndaten: Säurezahl, Hydroxylzahl und Viskosität (Normen siehe "Analytische Bestimmungsmethoden", Broschüre: Kunstharze Hoechst, Ausgabe 1982; Fa. Hoechst AG, Frankfurt/Main) | | | | |
| Hazenfarbzahl nach DIN 53995 (LTM1, Fa. Dr. Lange GmbH, Berlin) | | | | |

Die hergestellten Copolymere 1 bis 4 weisen geringste mittlere Molmassen (Zahlenmittel) und niedrigste Lösungsviskositäten (Ubbelohde: 50 %ig in BuAc 23 °C) auf.
Die Glasübergangstemperaturen sind oberhalb Raumtemperatur (20 °C).

### II.) Herstellung der Lacke

### 1. Autoreparaturlacke (2-Komponentenlacke)

Zur Herstellung der erfindungsgemäßen härtbaren Beschichtungsmittel werden die Komponenten bestehend aus einem Copolymerisat oder einer Mischung mehrerer solcher oder anderer Copolymerisate mit den Hilfs- und Zusatzstoffen, Lösungsmitteln und Vernetzern im beschriebenen Mischungsverhältnis (Tabelle 2) gemischt und mit weiterem Verdünnungsmittel auf die Spritzviskosität von 20 bis 21 Sekunden mit dem Auslaufbecher (DIN 52 211, 4 mm, 23 °C) eingestellt. Bei Komponenten mit niedriger Viskosität kann dies in Substanz erfolgen, wobei gegebenenfalls auf höhere Temperaturen erwärmt wird. Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit dem Copolymerisat oder einer Mischung mehrerer solcher oder anderer Copolymerisate oder einem geeigneten speziellen Anreibeharz in einem Dispergieraggregat geeigneter Bauweise eine Pigmentpaste erzeugt. Diese wird gemischt und unter Zufügung weiterer Verdünnungsmittel oder lacktypischer Zusätze komplettiert. Gegebenenfalls kann weiteres Bindemittel auf Basis der erfindungsgemäßen Copolymerisate oder ein Fremdharz, das mit den übrigen Komponenten des Lacksystems verträglich ist, zugemischt werden. Die Topfzeit und die Eigenschaften der resultierenden Filme hängen dabei von den Verfahrensbedingungen, d.h. von der Art und Menge der Ausgangsstoffe, Dosierung des Katalysators, der Temperaturführung etc. ab. Obwohl die Härtung in der Regel diskontinuierlich erfolgt, liegt es auch im Rahmen der Erfindung, das Vermischen der Komponenten und den Reaktionsverlauf kontinuierlich durchzuführen, beispielsweise mittels einer automatischen Lackiervorrichtung.

**Tabelle 2:**

| Herstellung der "high solid" (Autoreparatur) Klarlacke | | | | |
|---|---|---|---|---|
| | Copolymerisate | | | |
| Ansatz | 1 | 2 | 3 | 4 |
| Aussehen | transparent | transparent | transparent | transparent |
| FK % | 70,1 | 70,4 | 69,9 | 70,2 |
| OH-Zahl/% OH | 135/4,1 | 136/4,1 | 143/4,3 | 143/4,3 |
| Visk. mPa s(50%) | 51 | 58 | 61 | 52 |
| Bindemittel | 82 | 82 | 82 | 82 |
| Tinuvin® 292 | 0,5 | 0,5 | 0,5 | 0,5 |
| Tinuvin® 1130 | 1,5 | 1,5 | 1,5 | 1,5 |
| Si Öl LO 50% 10%ig | 1 | 1 | 1 | 1 |
| Solvesso® 100 | 1,5 | 1,5 | 1,5 | 1,5 |
| Xylol | 2,5 | 2,5 | 2,5 | 2,5 |
| BuAc | 11 | 11 | 11 | 11 |
| Desmodur® N 3390 | 29,5 | 29,9 | 31,4 | 31,4 |
| Auslaufbecher (DIN 53 211) (Sekunden) | 21 | 21 | 21 | 21 |
| Lackbezeichnung | Lack 1 | Lack 2 | Lack 3 | Lack 4 |
| Tinuvin® 292 "HALS" (Fa. Ciba Geigy, Basel) Tinuvin® 1130 UV-Absorber (Fa. Ciba Geigy, Basel) Si Öl LO 50% Verlaufsmittel Silikonöl (Fa. Wacker Chemie GmbH, Burghausen) Desmodur® N 3390 Isocyanurat-Gruppen aufweisendes Polyisocyanat (Fa. Bayer AG, Leverkusen) BuAc Butylacetat | | | | |

### 2. Autoserienlacke (1-Komponentenlacke)

### Herstellung eines erfindungsgemäßen, lösemittelhaltigen Klarlackes

Zu ca. 75 Gewichtsteilen des hergestellten Acrylatharz-Bindemittels Copolymer 1 werden unter Rühren 30,0 Gewichtsteile einer 75 %igen Lösung eines handelsüblichen, hochreaktiven Melamin-Formaldehydharzes in iso-Butanol (®Maprenal VMF 3926), 0,75 Gewichtsteilen eines UV-Absorbers vom Benzotriazol-Typ (®Tinuvin 1130, 100 %), 0,75 Gewichtsteilen eines Radikalfängers vom HALS-Typ (®Tinuvin 292, 100 %) zugegeben und gut vermischt.

Unter weiterem Rühren wird mit einem Gemisch aus 7,5 Gewichtsteilen iso-Butanol, 7,5 Gewichtsteilen ®Solvesso 150 und 7,5 Gewichtsteilen Butylglykol verdünnt.
Danach wird der Klarlack mit 19,0 Gewichtsteilen eines Lösemittelgemisches aus 20 Teilen ®Solvesso 100, 10 Teilen Xylol und 10 Teilen Methoxypropylacetat auf eine Applikationsviskosität von 25 Sekunden mit dem Auslaufbecher (DIN 53 211, 4 mm, 23°C) eingestellt.

Anschließend werden dem Lack 0,15 Gewichtsteilen eines "Slip"additives (®Additol XL 121, 0,1 % auf Gesamtlack) unter Rühren zugemischt.

Der erhaltene Klarlack besitzt schließlich einen Applikationsfeststoffgehalt von 54,0 Gew.-% (gemessen in Anlehnung an DIN 53 216 / 1 h, 120 °C).

®Maprenal VMF 3926 hochreaktives Melamin-Formaldehydharz in iso-Butanol (Fa. Cassella AG, Offenbach)
®Tinuvin 292 "HALS" (Fa. Ciba Geigy, Basel)
®Tinuvin 1130 UV-Absorber (Fa. Ciba Geigy, Basel)
®Additol XL 121 "Slip"additiv (Fa. Hoechst AG, Frankfurt/Main)

### III. Lacktechnische Prüfung

### 1.a) Lacktechnische Prüfung von "high solid" 2K-Klarlacken (Autoreparatur)

Die in 11.1. beschriebenen Lacksysteme wurden mittels 100 µm Rakeln auf gereinigte Glasplatten appliziert und unter den Bedingungen der Lufttrocknung und forcierter Trocknung (45 Minuten bei 60 °C) geprüft (Tabelle 3).

**Tabelle 3:**

| Lacktechnische Prüfung der "high solid" Klarlacke (Autoreparatur) | | | | |
|---|---|---|---|---|
| Lackbezeichnung | Lack 1 | Lack 2 | Lack 3 | Lack 4 |
| Aussehen | transparent | transparent | transparent | transparent |
| Ausgng./Topfzeit | 6 h/8 h gel. | 6 h/8 h gel. | 6 h/8 h gel. | 6 h/8 h gel. |
| Staubtrocknung | 6' | 8' | 7' | 7' |
| Klebfreitrocknung | 2 h | 1,5 h | 1,5 h | 1,5 h |
| FK-1h 125°C (%) | 61,5 | 60,7 | 60,5 | 61,3 |
| Pendelhärte nach | | | | |
| 24 h | 101 | 96 | 102 | 91 |
| 2 d | 134 | 141 | 151 | 143 |
| 5 d | 197 | 188 | 198 | 178 |
| 10 d | 221 | 205 | 202 | 199 |
| Superbenzin nach 10 d in Min. | > 30' | > 30' | > 30' | > 20' |
| Pendelhärte nach 45'60°C-Trocknung | | | | |
| 24h | 166 | 171 | 181 | 175 |
| 2d | 203 | 201 | 192 | 188 |
| 5d | 219 | 208 | 199 | 196 |
| 45'60° C-Trocknung Superbenzin nach 5 d in Min. | > 30' | > 30' | > 30' | > 25' |
| Pendelhärten nach König FK Festkörpennassengehalt nach DIN 53 216 d Tage h Stunden ' Minuten gel. geliert | | | | |

- **Fazit:**: Die erfindungsgemäßen Beschichtungsmittel weisen in praxisgerechten formulierten Klarlacken unkatalysiert sehr hohe Lackfestkörpergehalte, sehr hohe Filmhärten und Beständigkeiten mit höchster Trocknungsgeschwindigkeit und sehr rascher Durchtrocknung auf (Reaktivitätssteigerung).
Der Decklackstand ist den Eigenschaften der Standardsysteme ebenbürtig.
Standardsysteme: "high solid" Bindemittel Macrynal® SM 515, Macrynal® SM 516 der Fa. Hoechst AG, Frankfurt/Main

### b) Warmklebetest (Simulation: IR-Bestrahlung)

Der Lack 1 wurde auf ein Standard "metallic basecoat" mit 1,5 Spritzgängen appliziert und gegen entsprechenden Standardlack (Basis: Bindemittel ohne hohen Säuregehalt) bei Ofenlagerung (60 °C) -"IR-Bestrahlung" nach verschiedenen Zeiten auf Klebrigkeit (im Ofen) überprüft.

| | Lack 1 | Standard |
|---|---|---|
| Warmklebetest | | |
| 30' 60 °C | 1 - 2 | 5 |
| 40' 60 °C | 1 | 4 - 5 |
| 0 = bester Wert 5 = schlechtester Wert | | |

- **Fazit:**: Die Härtungsreaktion bei einer Reparaturlackierung wird durch die erfindungsgemäßen Beschichtungsmittel so forciert, daß die Oberfläche nach einer Trocknung bei 60 °C nach 40 Minuten nicht mehr klebrig ist.

### 2. Lacktechnische Prüfung von "high solid" 1 K-Klarlacken (Autoserienlacke)

Der wie unter **II.2.** beschrieben hergestellte Klarlack und ein als Vergleich mitgeprüfter, handelsüblicher 1 K-Automobil-Serienklarlack(Applikationsfeststoffgehalt: 46,0 Gew.-%, gemessen in Anlehnung an DIN 53 216 / 1 h , 120 °C; Applikationsviskosität: 25 Sekunden, gemessen nach DIN 53 211, 4 mm, 23 °C) werden nach Entlüften mit 150 µm Naßfilmschichtdicke auf Gradientenbleche (Sondertiefziehmaterial mit RP-Oberfläche nach DIN 1624) aufgezogen und 20 Minuten bei 100 bis 160 °C im Gradientenofen eingebrannt.

Die so erhaltenen klaren und hochglänzenden Lackierungen wurden geprüft. Die Prüfergebnisse sind in der folgenden Tabelle zusammengefaßt.

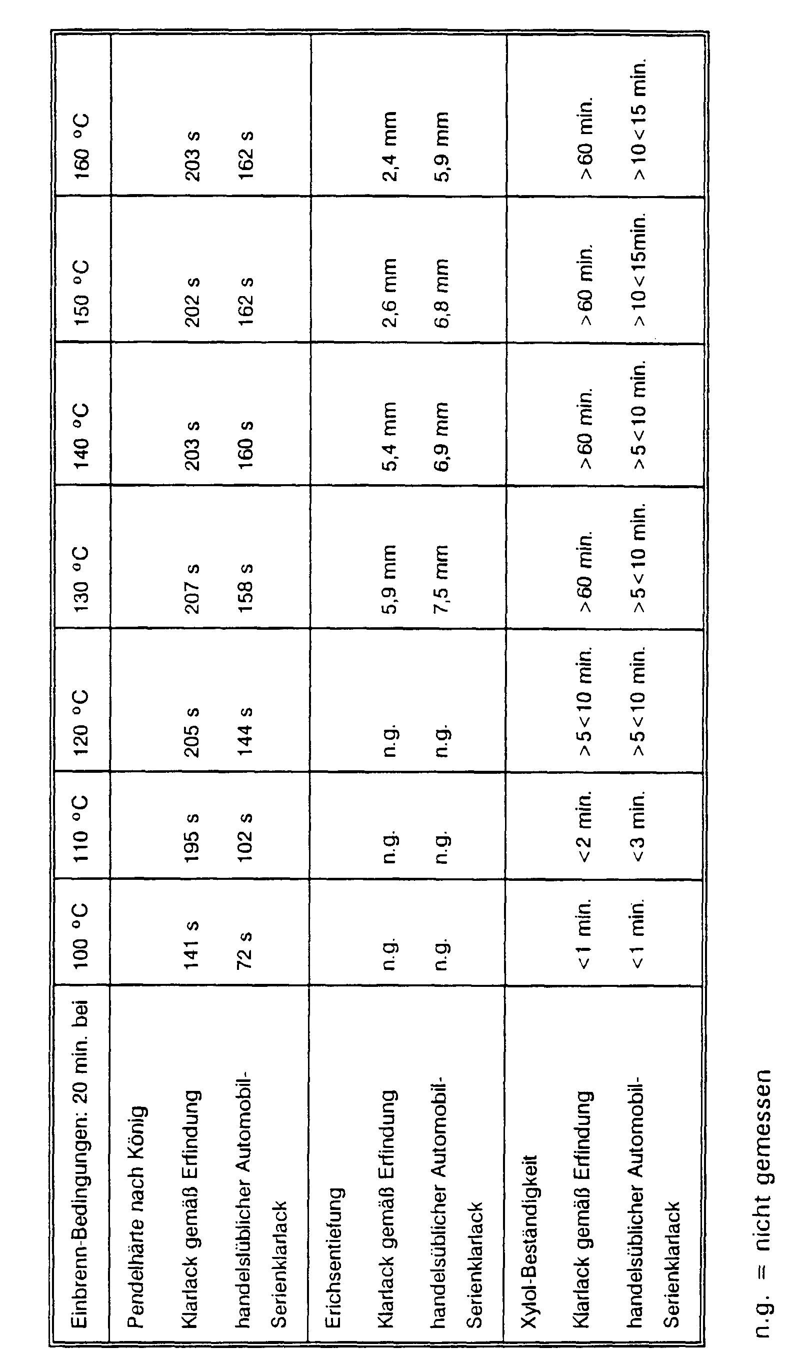

Zur Beständigkeitsprüfung gegen Schwefelsäure (10 Gew.-%), Kationen (NH₄⁺, Ca²⁺, Na⁺, K⁺) - Anionen (Cl⁻, NO₃⁻, SO₄²⁻)-Test werden die Klarlacke mit 150 µm Naßfilmschichtdicke auf Gradientenbleche (Sondertiefziehmaterial mit RP-Oberfläche nach DIN 1624) aufgezogen und 20 Minuten bei 140 °C eingebrannt.

Danach werden die lackierten Bleche in einem Gradientenofen auf Temperaturen von 50 °C bis 80 °C erwärmt.

Zur Prüfung der Beständigkeitseigenschaften werden die Klarlackfilme 30 Minuten bei 50 °C bis 80 °C im Gradientenofen mit den entsprechenden Reagenzien belastet. Anschließend werden diese Reagenzien mit Wasser abgewaschen und die Lackfilme vorsichtig mit einem weichen Textillappen getrocknet und visuell¹⁾ beurteilt. Die Prüfergebnisse sind in der folgenden Tabelle zusammengefaßt.

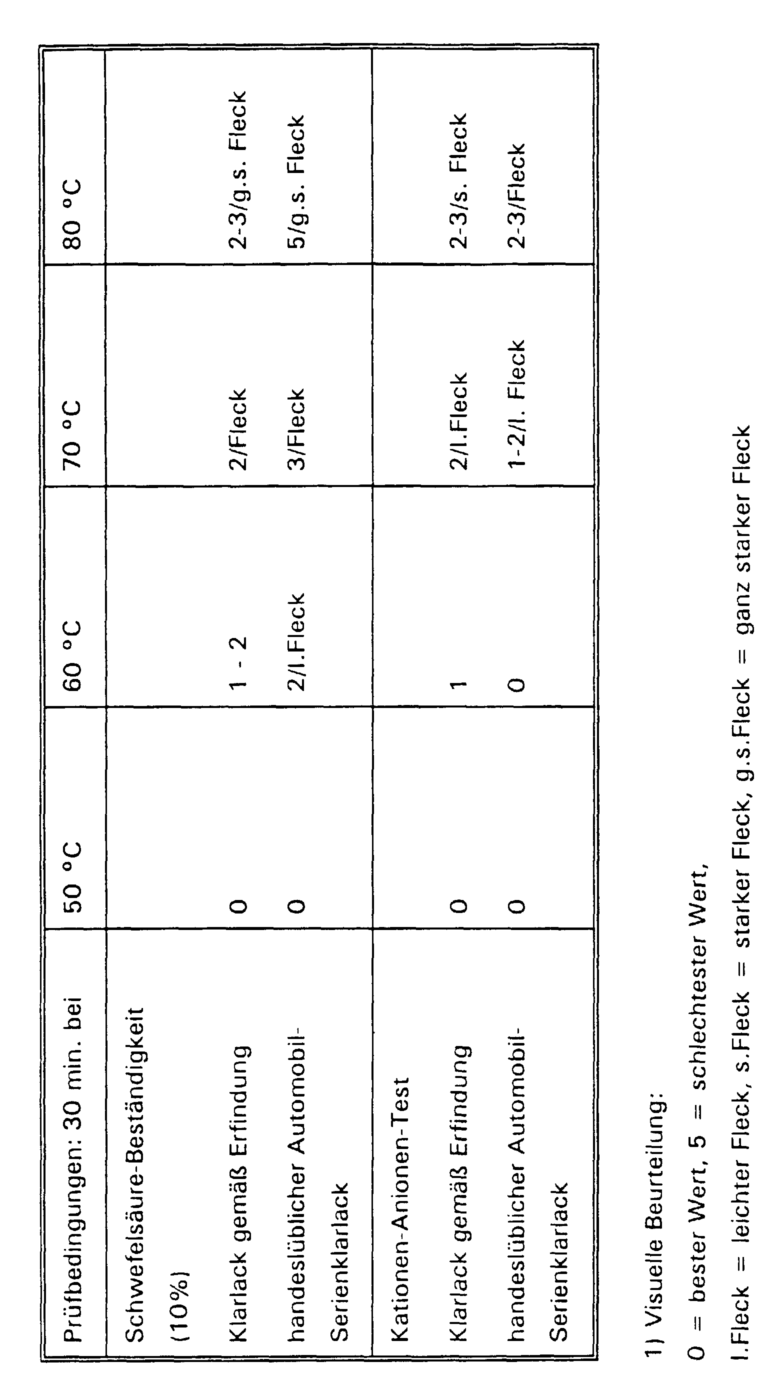

### Fazit :

Die oben beschriebenen Versuche zeigen, daß der Einsatz des erfindungsgemäßen Acrylatharz-Bindemittels bei der Formulierung von 1K-Automobilklarlacken zu festkörperreicheren und bereits im unteren Einbrennbereich hochreaktiven (siehe Pendelhärte) Klarlacken führt.

Die Beständigkeiten gegenüber Xylol und Schwefelsäure sind bei dem erfindungsgemäßen Beschichtungsmittel im Vergleich zu dem eingesetzten Automobil-Serienklarlack hervorragend.

## Patentansprüche

1. Hydroxyl- und Carboxylgruppen enthaltende Copolymerisate, erhältlich durch Umsetzung von
A) 3 bis 50 Gew.% eines oder mehrerer Glycidylester von aliphatischen gesättigten Monocarbonsäuren mit einem tertiären oder quaternären α-C-Atom,
und
B) 97 bis 50 Gew. % von mindestens zwei olefinisch ungesättigten copolymerisierbaren Monomeren, von denen jeweils mindestens eines der Gruppe B1 und mindestens eines der Gruppe B2 angehört, wobei die Gruppe B1 Monomere mit mindestens einer COOH-Gruppe enthält und die Gruppe B2 sterisch gehinderte Ester der Acryl- oder Methacrylsäure mit Alkoholen enthält, die ausgewählt sind aus der Gruppe Cyclohexylalkohol, 4-tert. Butyl-cyclohexylalkohol, 3,3,5-Trimethylcyclohexylalkohol, Dihydrocyclopentadienylalkohol und Isobornylalkohol,
in Gegenwart von radikalischen Polymerisationsinitiatoren, wobei die Menge an COOH-Gruppen in der Komponente B die Menge an Epoxygruppen in der Komponente A soweit übersteigt, daß das resultierende Copolymerisat eine Säurezahl von mindestens 15 mgKOH/g aufweist, und wobei die Copolymeren eine zahlenmittlere molare Masse unter 5000 g/mol, eine OH-Zahl von 40 bis 250 mg/g und eine Lösungsviskosität von 10 bis 2000 mPa·s (gemessen in 50 %iger Lösung in Butylacetat bei 23 °C gemäß DIN 53018) besitzen.

2. Copolymerisate nach Anspruch 1, dadurch gekennzeichnet, daß die olefinisch ungesättigten Monomeren gemäß B zusätzlich eine oder mehrere der Komponenten B3 bis B5 enthalten, nämlich
B3) einen oder mehrere Ester von ungesättigten Carbonsäuren mit aliphatischen Polyolen, ausgewählt aus der Gruppe der Alkylendiole mit 2 bis 10 Kohlenstoffatomen und der Oligo-Oxyalkylen-Glykole,
B4) einen oder mehrere Ester einer ungesättigten Carbonsäure mit einem einwertigen unverzweigten aliphatischen Alkohol mit 1 bis 20 C-Atomen und
B5) eine oder mehrere olefinisch ungesättigte Verbindungen, die nicht unter B1, B2, B3 oder B4 fallen.

3. Copolymerisate nach Anspruch 1, dadurch gekennzeichnet, daß als Monomer B2 der Acryl- oder Methacrylsäureester von Isoborneol eingesetzt wird.

4. Copolymerisate nach Anspruch 2, dadurch gekennzeichnet, daß Monomer B2 der Acryl- oder Methacrylsäureester von Isoborneol und als weiteres Monomer B5 Styrol eingesetzt wird.

5. Verfahren zur Herstellung von Copolymerisaten gemäß Anspruch 1, dadurch gekennzeichnet, daß die Komponente A und die Komponenten B und ein oder mehrere radikalische Initiatoren einer gemeinsamen Polymerisation unterworfen werden.

6. Verfahren zur Herstellung von Copolymerisaten gemäß Anspruch 1, dadurch gekennzeichnet, daß in der Reaktion die Komponente A vorgelegt wird, danach die Komponenten B und ein oder mehrere radikalische Initiatoren zusammen oder jeweils für sich in Substanz zugefügt werden und die erhaltene Mischung einer gemeinsamen Polymerisation unterworfen wird.

7. Verfahren zur Herstellung von Copolymerisaten gemäß Anspruch 1, dadurch gekennzeichnet, daß in der Reaktion eine oder mehrere Komponenten ausgewählt aus der Gruppe B sowie ein Initiator vorgelegt werden, danach die restlichen Komponenten B, die Komponente A und ein oder mehrere radikalische Initiatoren zusammen oder jeweils für sich in Substanz zugefügt werden und die erhaltene Mischung einer gemeinsamen Polymerisation unterworfen wird.

8. Verfahren zur Herstellung von Copolymerisaten gemäß Anspruch 1, dadurch gekennzeichnet, daß zunächst die Komponenten B unter Zusatz eines oder mehrerer radikalbildender Initiatoren sowie gegebenenfalls eines Lösemittels polymerisiert werden, und danach die Umsetzung mit der Komponente A durchgeführt wird.

9. Verwendung der Copolymerisate nach Anspruch 1 zur Herstellung von Überzügen.

10. Verwendung der Copolymerisate nach Anspruch 1 als Bindemittel für Lacke, insbesondere für "high-solid"-Lacke.

11. Verwendung der Copolymerisate nach Anspruch 1 zur Herstellung von Pulverlacken.

12. Verwendung von Copolymerisaten gemäß Anspruch 1 als Bindemittel in Einkomponenten-Lacken.

13. Verwendung von Copolymerisaten gemäß Anspruch 1 als Bindemittel in Zweikomponenten-Lacken.

14. Einkomponentenlacke, die als Bindemittel Copolymerisate gemäß Anspruch 1 und als Härtungsmittel Umsetzungsprodukte von Formaldehyd mit Aminoplastbildnern enthalten, die teilweise oder vollständig mit aliphatischen Alkoholen mit 1 bis 8 Kohlenstoffatomen veräthert sein können.

15. Zweikomponentenlacke, die als Bindemittel Copolymerisate gemäß Anspruch 1 und als Härtungsmittel Polyisocyanate oder solche Derivate von Polyisocyanaten enthalten, die unter Härtungsbedingungen mit dem Copolymerisat Urethane bilden.

## Claims

1. A copolymer containing hydroxyl and carboxyl groups which is obtainable by reacting
A) from 3 to 50 % by weight of one or more glycidyl esters of aliphatic saturated monocarboxylic acids having a tertiary or quaternary α carbon atom,
and
B) from 97 to 50 % by weight of at least two olefinically unsaturated copolymerizable monomers of which in each case at least one belongs to group B1 and at least one belongs to group B2, group B1 comprising monomers containing at least one COOH group and group B2 comprising sterically hindered esters of acrylic or methacrylic acid with alcohols which are selected from the group consisting of cyclohexyl alcohol, 4-tert-butylcyclohexyl alcohol, 3,3,5-trimethylcyclohexyl alcohol, dihydrocyclopentadienyl alcohol and isobornyl alcohol,
in the presence of free-radical polymerization initiators, the quantity of COOH groups in component B exceeding the quantity of epoxy groups in component A to such an extent that the resulting copolymer has an acid number of at least 15 mg of KOH/g, and the copolymers having a number average molar mass below 5000 g/mol, an OH number of from 40 to 250 mg/g and a solution viscosity of from 10 to 2000 mPa·s (measured in a 50 % strength solution in butyl acetate at 23°C in accordance with DIN 53018).

2. A copolymer as claimed in claim 1, wherein the olefinically unsaturated monomers of B additionally comprise one or more of components B3 to B5, namely
B3) one or more esters of unsaturated carboxylic acids with aliphatic polyols selected from the group consisting of alkylenediols having from 2 to 10 carbon atoms and of oligo-oxyalkylene glycols,
B4) one or more esters of an unsaturated carboxylic acid with a monohydric unbranched aliphatic alcohol having 1 to 20 carbon atoms, and
B5) one or more olefinically unsaturated compounds other than those coming under B1, B2, B3 or B4.

3. A copolymer as claimed in claim 1, wherein the acrylate or methacrylate of isoborneol is used as monomer B2.

4. A copolymer as claimed in claim 2, wherein the acrylate or methacrylate of isoborneol is used [lacuna] monomer B2 and styrene is used as further monomer B5.

5. A process for the preparation of a copolymer as claimed in claim 1, which comprises subjecting component A and components B and one or more free-radical initiators to conjoint polymerization.

6. A process for the preparation of a copolymer as claimed in claim 1, which comprises introducing component A as initial charge in the reaction, then adding components B and one or more free-radical initiators, together or separately, in bulk, and subjecting the resulting mixture to conjoint polymerization.

7. A process for the preparation of a copolymer as claimed in claim 1, which comprises introducing as initial charge one or more components selected from the group B and an initiator in the reaction, then adding the remaining components B, component A and one or more free-radical initiators, together or separately, in bulk, and subjecting the resulting mixture to conjoint polymerization.

8. A process for the preparation of a copolymer as claimed in claim 1, which comprises first of all polymerizing components B with the addition of one or more free-radical initiators and, if desired, of a solvent, and then carrying out the reaction with component A.

9. The use of a copolymer as claimed in claim 1 to produce coatings.

10. The use of a copolymer as claimed in claim 1 as a binder for coating materials, especially for high-solids coating materials.

11. The use of a copolymer as claimed in claim 1 to produce powder coatings.

12. The use of a copolymer as claimed in claim 1 as a binder in one-component coating materials.

13. The use of a copolymer as claimed in claim 1 as a binder in two-component coating materials.

14. A one-component coating material which comprises as binder a copolymer as claimed in claim 1 and as curing agent a reaction product of formaldehyde with an amino resin former, which may be partially or completely etherified with aliphatic alcohols having 1 to 8 carbon atoms.

15. A two-component coating material which comprises as binder a copolymer as claimed in claim 1 and as curing agent a polyisocyanate or a polyisocyanate derivative which forms a urethane with the copolymer under curing conditions.

## Revendications

1. Copolymères contenant des groupes hydroxyle et carboxyle, que l'on peut obtenir par réaction de
A) de 3 à 50 % en poids d'un ou plusieurs esters glycidyliques d'acides monocarboxyliques saturés aliphatiques avec un atome α-C tertiaire ou quaternaire,
et
B) de 97 à 50 % en poids d'au moins deux monomères à insaturation oléfinique copolymérisables, dont à chaque fois au moins un appartient au groupe B1 et au moins un au groupe B2, le groupe B1 contenant des monomères avec au moins un groupe COOH et le groupe B2 contenant des esters à encombrement stérique d'acide acrylique ou méthacrylique avec des alcools, que l'on prend parmi l'alcool cyclohexylique, l'alcool 4-tert-butylcyclohexylique, l'alcool 3,3,5-triméthylcyclohexylique, l'alcool dihydrocyclopentadiénylique et l'alcool isobornylique,
en présence d'amorceurs de polymérisation radicalaires, la quantité de groupes COOH dans le composant B est supérieure à la quantité de groupes époxy dans le composant A, dans la mesure où le copolymère résultant présente un indice d'acide d'au moins 15 mg de KOH/g et les copolymères ayant une masse molaire moyenne en nombre inférieure à 5000 g/mol, un indice OH de 40 à 250 mg/g et une viscosité en solution de 10 à 2000 mPa.s (mesurée sur une solution à 50 % dans l'acétate de butyle, à 23 °C, selon la norme DIN 53018).

2. Copolymères selon la revendication 1, caractérisés en ce que les monomères à insaturation oléfinique selon B contient en plus un ou plusieurs composants de B3 à B5, à savoir
B3) un ou plusieurs esters d'acides carboxyliques insaturées avec des polyols aliphatiques pris parmi les alkylène-diols avec 2 à 10 atomes de carbone et des oligo-oxyalkylène-glycols,
B4) un ou plusieurs esters d'un acide carboxylique insaturé avec un alcool aliphatique monovalent avec 1 à 20 atomes de carbone, et
B5) un ou plusieurs composés à insaturation oléfinique qui n'entrent pas dans les points B1, B2, B3 ou B4.

3. Copolymères selon la revendication 1, caractérisés en ce que l'on utilise en tant que monomère B2 des esters d'isobornéol de l'acide acrylique ou méthacrylique.

4. Copolymères selon la revendication 2, caractérisés en ce que l'on utilise le monomère B2, l'ester d'isobornéol d'acide acrylique ou méthacrylique et en tant qu'autre monomère B5, le styrène.

5. Procédé pour la préparation de copolymères selon la revendication 1, caractérisé en ce que l'on soumet le composant A et les composants B et un ou plusieurs amorceurs radicalaires à une polymérisation commune.

6. Procédé pour la préparation de copolymères selon la revendication 1, caractérisé en ce que l'on introduit dans le réacteur d'abord le composant A, ensuite les composants B et un ou plusieurs amorceurs radicalaires conjointement ou chacun séparément et on polymérise le mélange obtenu par une polymérisation commune.

7. Procédé pour la préparation de copolymères selon la revendication 1, caractérisé en ce que l'on introduit dans la réaction un ou plusieurs composants pris dans le groupe B ainsi qu'un amorceur, ensuite les autres composants B restant, le composant A et un ou plusieurs amorceurs radicalaires conjointement ou chacun séparément et on polymérise le mélange obtenu par une polymérisation commune.

8. Procédé pour la préparation de copolymères selon la revendication 1, caractérisé en ce qu'on polymérise le composant B en ajoutant un ou plusieurs amorceurs radicalaires ainsi qu'éventuellement un solvant, et ensuite on met en oeuvre la réaction avec le composant A.

9. Utilisation des copolymères selon la revendication 1 pour la préparation de revêtements.

10. Utilisation des copolymères selon la revendication 1 en tant que liant de vernis, plus particulièrement de vernis "high-solid".

11. Utilisation des copolymères selon la revendication 1 pour la préparation de vernis en poudre.

12. Utilisation de copolymères selon la revendication 1 en tant que liant dans les vernis à un composant.

13. Utilisation de copolymères selon la revendication 1 en tant que liant dans les vernis à deux composants.

14. Vernis à un composant, qui contiennent en tant que liant des copolymères selon la revendication 1 et en tant qu'agent durcisseur des produits de réaction du formaldéhyde avec des agents formateurs d'aminoplastes, qui peuvent être partiellement ou entièrement éthérifiés avec des alcools aliphatiques comportant de 1 à 8 atomes de carbone.

15. Vernis à deux composants, qui contiennent en tant que liant des copolymères selon la revendication 1 et en tant qu'agent durcisseur des polyisocyanates ou de tels dérivés de polyisocyanates qui forment des uréthannes avec le copolymère dans les conditions de durcissement.
